# EUROPEAN PATENT SPECIFICATION

(11) **EP 2 329 969 B1**
(45) Date of publication and mention of the grant of the patent: **20.02.2013**
(21) Application number: 10193690.4
(22) Date of filing: 03.12.2010
(51) Int. Cl.: B60G 3/20, B60G 21/02, B60G 21/05, B60G 11/00, B60G 11/28, B60G 11/27, B60G 21/073

(54) **Front axle assembly for a vehicle**
Vorderachszusammensetzung für ein Fahrzeug
Assemblage d'essieu avant pour un véhicule

(30) Priority: 03.12.2009 NL 2003903; 17.03.2010 NL 2004418
(43) Date of publication of application: 08.06.2011
(73) Proprietor: Zuidberg Techniek Holding B.V., 8307 DE Ens (NL)
(72) Inventor: Zuidberg, Jeroen Emiel, 8011 CH Zwolle (NL)
(74) Representative: Louwaard, Jan-Willem Paul

(56) References cited:
- EP-A1- 0 410 676
- EP-A1- 1 600 311
- EP-A1- 1 650 108
- FR-A- 1 281 427
- US-A- 2 113 094
- US-A- 2 186 065
- US-A- 3 292 945
- US-A- 5 364 114
- US-A1- 2003 132 626

## Description

The present invention relates to a front axle assembly for a vehicle such as an agricultural tractor.

Agricultural tractors, also referred to as tractors or carrying vehicles, are utilized when working farmland for the purpose of carrying and/or pulling agricultural machines, such as mowers, ploughs, harvesting machines etc. Such an agricultural tractor is generally provided with a rolling chassis provided with two wheel axles, a front axle and a rear axle. The rear wheels arranged on the rear axle are generally driven. The pressure on the rear wheels resulting from an agricultural machine being carried or pulled on the rear side of the agricultural tractor here enhances the grip of the rear wheels on the farmland. However, this pressure on the rear wheels can also result in the rear wheels sinking into the ground and becoming stuck therein. In order to prevent the agricultural tractor becoming stuck the rear wheels generally take a large and wide form. The front wheels on the other hand generally take a small and thin form compared to the rear wheels. An agricultural tractor can hereby move over the farmland more effectively. This is because the front wheels then have the least resistance. The rear axle generally comprises a transmission housing which is rigidly connected to the chassis of the agricultural tractor and on opposite sides of which the rear wheels are arranged rigidly, i.e. unsprung. The rear wheels are then connected rigidly to the chassis so that a direct transmission of the driving, carrying and/or pulling forces is possible from the chassis to the rear wheels, and vice versa, and the agricultural tractor can displace great loads over farmland. The front axle generally takes a sprung or oscillating form, i.e. the front wheels arranged thereon can move relative to the chassis. It is hereby possible to avoid the front wheels losing contact with the ground when for instance one of the rear wheels sinks further into the ground than the other of the rear wheels and thereby tilts the chassis of the agricultural tractor rigidly connected to the rear wheels. Such a situation may also occur on an uneven terrain. Maintaining contact of the front wheels with the ground is for instance important since the front axle generally takes a steerable form, i.e. the front axle enables the front wheels to pivot relative to the chassis so that the agricultural tractor can be steered in a desired direction during movement thereof. If the front axle takes a driven form, so that the agricultural tractor has four-wheel drive, a sprung or oscillating front axle avoids one of the driven wheels losing contact with the ground.

EP 0 410 676 A1 describes a suspension system including the features according to the pre-amble of claim 1.

The front axle assembly according to the invention comprises
- a suspension construction;
- two suspension arm constructions which extend in opposite directions from the suspension construction and are both adapted at an end remote from the suspension construction to bear a wheel of the vehicle, and which both comprise a suspension arm connected pivotally to the suspension construction;
- a coupling element which is movable relative to the suspension construction and extends between the ends of the suspension arm constructions remote from the suspension construction, and which connects the suspension arms to each other such that the pivoting movements of the suspension arms relative to the suspension construction are linked; and
- at least one member changeable in length which is arranged substantially centrally between the ends of the suspension arm constructions remote from the suspension construction and connected to both suspension arms such that, with a change in the length of the at least one member changeable in length, a pivoting movement of both suspension arms relative to the suspension construction can be realized.

Such a front axle assembly can be coupled by means of the suspension construction to the chassis of an agricultural tractor so that front wheels can be connected to the chassis. Alternatively, the chassis of the agricultural tractor forms the suspension construction. By linking the pivoting movement of the two suspension arms by means of a coupling element movable relative to the suspension construction it is possible, by means of a member changeable in length positioned substantially centrally between the ends of the suspension arm constructions remote from the suspension construction, i.e. substantially centrally between the front wheels, to influence the pivoting movement of the two suspension arms, and thereby the movement of the chassis, relative to the two front wheels. This makes it possible to omit separate elements changeable in length positioned on either side of the suspension construction for the purpose of influencing the movement of the chassis relative to the individual front wheels. This has the advantage that more space is available for movement of the front wheels relative to the chassis, such as upward movement of the front wheels relative to the chassis, and for inward rotation of the front wheels relative to the chassis in the case of a steerable front axle. In addition, the linking of the pivoting movement of the two suspension arms by means of a coupling element movable relative to the suspension construction makes it possible to give the front axle assembly an oscillating form. Oscillating means that a movement of one of the front wheels relative to the chassis resulting from pivoting of a suspension arm results in a movement of the other front wheel in the opposite direction. Substantially centrally here comprises in the centre between the ends of the suspension arm constructions remote from the suspension construction, close to this centre, and close to this centre on either side thereof. In a front axle assembly according to the invention the coupling element is particularly movable relative to the suspension construction such that the front axle assembly is oscillating. In a front axle assembly according to the invention the coupling element is more particularly movable relative to the suspension construction in a plane extending substantially perpendicularly of the pivot axes around which the suspension arms connected by means of the coupling element are pivotable relative to the suspension construction.

In a favourable embodiment of the front axle according to the invention the at least one member changeable in length comprises at least one member from the group of spring member, damping member and length-adjustable member. This makes it possible to provide an agricultural tractor with a suspension, damping and/or height adjustment by means of the front axle assembly according to the invention. In a further favourable embodiment hereof the at least one member changeable in length is a member from the group of pneumatic member, preferably a pneumatic bellows, and hydraulic member. The use of such members has the advantage that a combination of suspension, damping and/or height adjustment of the chassis can be realized by means of a single type of member. The use of a pneumatic bellows, or air bellows, has the particular advantage that a very comfortable spring behaviour and moreover a height adjustment can be realized.

In the front axle assembly according to the invention the at least one member changeable in length is connected with a first end thereof to the suspension construction, is connected with a second end thereof to the coupling element, and is changeable in length substantially transversely of the direction in which the coupling element extends. The at least one member changeable in length is then connected to both suspension arms via the coupling element. A change in the length of the member then brings about a displacement of the coupling element relative to the suspension construction substantially transversely of the direction in which the coupling element extends. Because the coupling element is connected to the suspension arms, a pivoting movement of the suspension arms relative to the suspension construction is then realized. This embodiment is favourable when extendable members are used which have a relatively large size in the direction transversely of the direction in which the member is changeable in length, such as a pneumatic bellows. This embodiment makes it possible to keep the size of the front axle assembly according to the invention small in the direction transversely of the directions in which the suspension arm constructions extend. A small size of the front axle assembly in this direction is important since this size affects the ground clearance under the front axle assembly and the space above the front axle assembly available for cooling of the engine.

In a favourable embodiment hereof two members changeable in length are arranged on either side of the centre between the ends of the suspension arm constructions remote from the suspension construction. Particularly when an air bellows is used as member changeable in length, this embodiment with two mutually adjacent air bellows has the advantage that the size of the front axle assembly can be smaller than when a single air bellows is used. In this embodiment it is also possible to influence the tilting of the coupling element which occurs as a result of a movement of the front wheels in opposite direction, and thereby the oscillating behaviour of the front axle assembly, for instance by giving one of the two members a different length than the other.

In the front axle assembly according to the invention the coupling element is directly connected close to a first end thereof to the one suspension arm and connected close to the second end thereof to the other suspension arm via an additional coupling element which is connected pivotally to the other suspension arm and to the second end of the coupling element. This measure makes it possible to compensate a possible difference in length of the coupling element between extreme positions of the suspension arms.

In a favourable alternative embodiment of the front axle assembly according to the invention, wherein the at least one member changeable in length is changeable in length substantially transversely of the direction in which the coupling element extends, the coupling element comprises the at least one member changeable in length and the at least one member changeable in length is changeable in length substantially in the direction in which the coupling element extends. This embodiment is favourable when a member changeable in length is used which has a relatively large size in the direction in which the member is changeable in length. When such a member is applied, this embodiment makes it possible to keep the size of the front axle assembly according to the invention small in the direction transversely of the directions in which the suspension arm constructions extend.

In a further favourable embodiment of the front axle assembly according to the invention both suspension arm constructions comprise at least a lower suspension arm and an upper suspension arm extending substantially parallel to each other, wherein the coupling element connects one of the lower suspension arms and the upper suspension arms to each other and extends at a level between the lower suspension arms and the upper suspension arms. When such a member is used this embodiment also makes it possible to keep the size of the front axle assembly according to the invention small in the direction transversely of the directions in which the suspension arm constructions extend.

In a further favourable embodiment of the front axle assembly according to the invention at least one of the coupling element and the at least one member changeable in length extends in a recess of the suspension construction. In this embodiment the coupling element and/or the member changeable in length is at least partly protected.

In a further favourable embodiment of the front axle assembly according to the invention the suspension construction is a differential housing.

In a further favourable embodiment of the front axle assembly according to the invention a wheel hub to which the wheel to be carried can be coupled is arranged on both ends of the suspension arm constructions remote from the suspension construction, which wheel hub is connected rotatably to the associated suspension arm construction. This measure makes it possible for the front axle assembly according to the invention to be a steerable front axle.

The invention also relates to a vehicle, preferably an agricultural tractor, provided with an above described front axle according to the invention.

Although the above described configuration of an agricultural tractor having a rear axle with large rear wheels and a front axle with small front wheels is most common, it can also be the case that the above described rear axle is arranged at the front of the agricultural tractor and the above described front axle at the rear. This configuration occurs for instance in agricultural tractors which carry the main load at the front.

The front axle according to the invention can also be applied in vehicles other than an agricultural tractor, such as a fork-lift truck.

The present invention will be further elucidated hereinbelow on the basis of an exemplary embodiment which is shown schematically in the accompanying figures. This is a non-limitative exemplary embodiment.

In the figures:
- figure 1 is a partly cut-away perspective view of a vehicle in the form of an agricultural tractor provided with a front axle assembly according to the invention;
- figure 2 is a perspective view of the front side of the front axle assembly of figure 1;
- figure 3 is a perspective view of the rear side of the front axle assembly of figure 1;
- figures 4-6 show front views of the front axle assembly of figure 1 in different situations; and
- figure 7 is a cross-sectional front view of an alternative embodiment of the front axle assembly of figures 1-6.

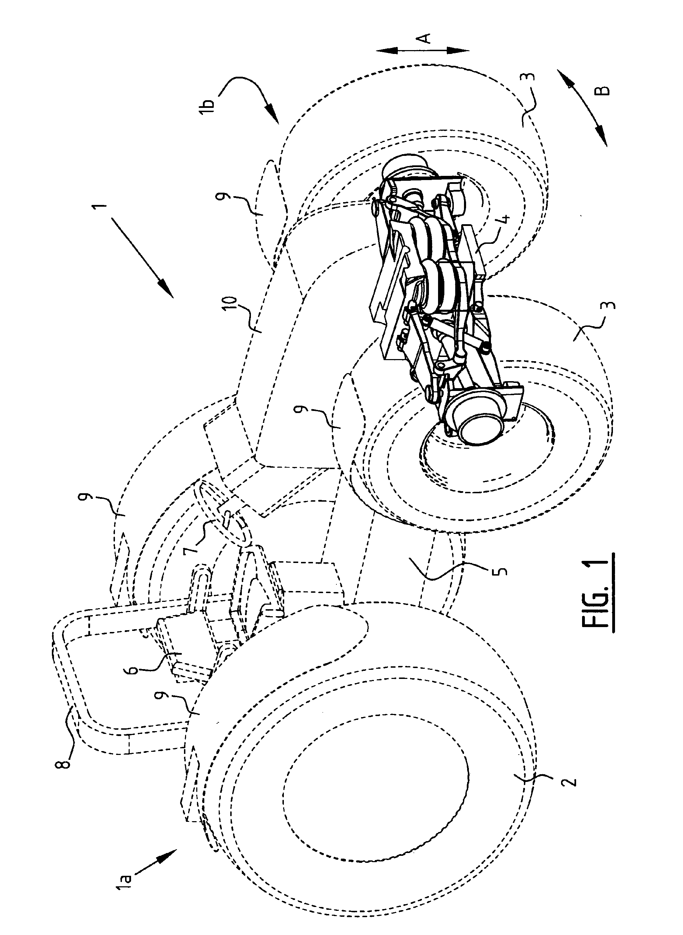

Figure 1 shows a vehicle in the form of an agricultural tractor 1. Agricultural tractor 1 is shown with relatively large rear wheels 2 on rear side 1a and two relatively small front wheels 3 on front side 1b. Rear wheels 2 are arranged on a rear axle (not shown) and front wheels 3 on a front axle assembly 4. Front axle assembly 4 is coupled to chassis 5 and takes a sprung and steerable form, i.e. front wheels 3 can move upward/downward as according to arrows A relative to chassis 5 and the front wheels can rotate inward/outward as according to arrows B relative to chassis 5. This latter makes it possible for a driver of the agricultural tractor seated on seat 6 to cause the agricultural tractor to change direction during movement thereof by means of steering wheel 7. Agricultural tractor 1 is further shown in this view with a rollover protection 8, splash guards 9 and a hood 10 under which the drive (not shown) of agricultural tractor 1 is situated, for instance a diesel engine.

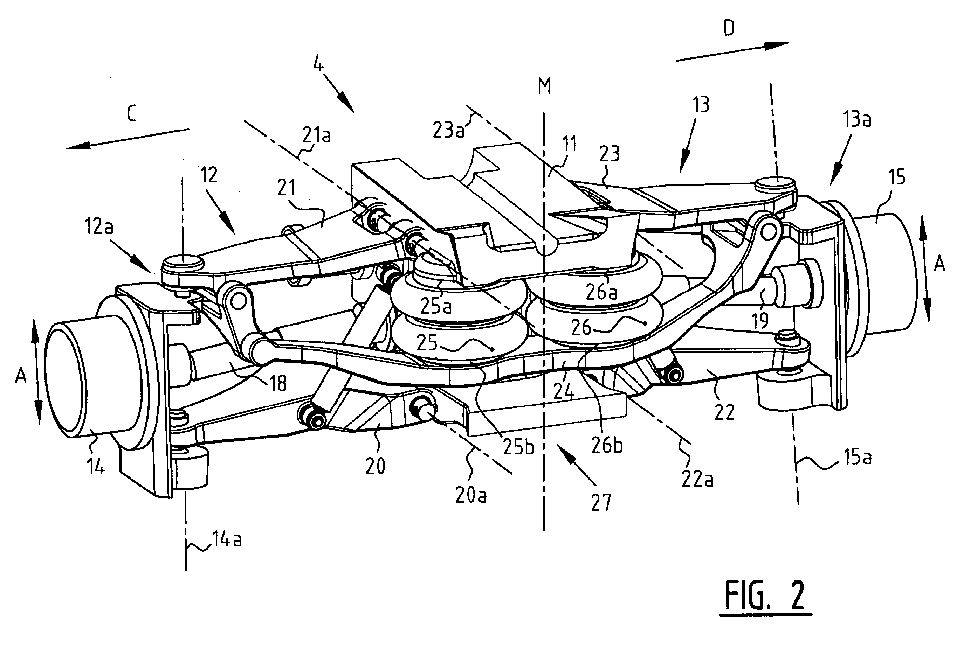

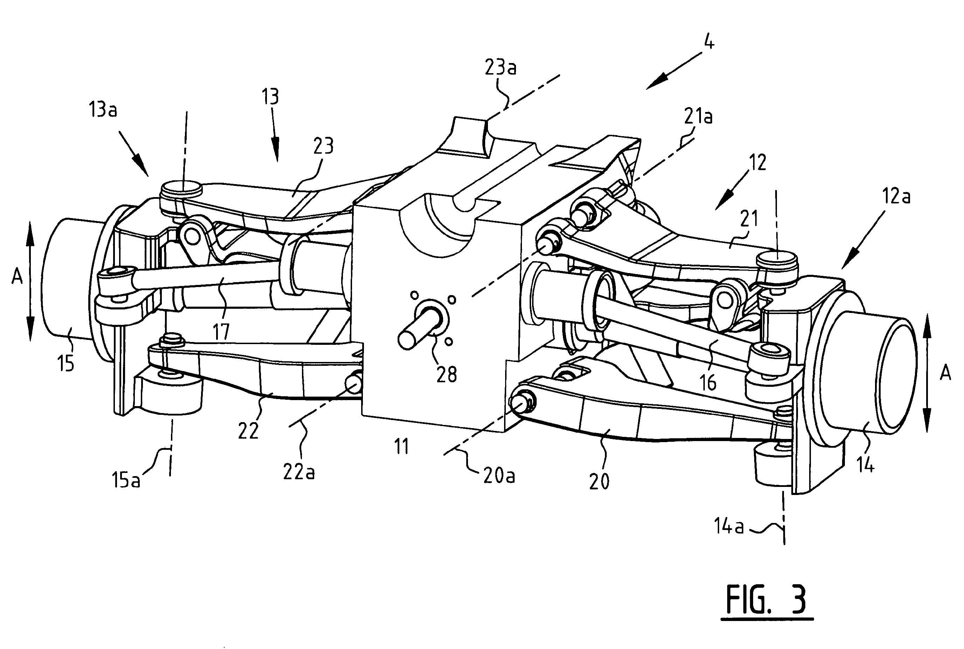

Figure 2 shows the front side of front axle assembly 4 of figure 1 in more detail, and figure 3 the rear side. Front axle assembly 4 is shown with a suspension construction formed as differential housing 11 which can be coupled to chassis 5 of agricultural tractor 1. Two suspension arm constructions 12, 13 extend in opposite directions from differential housing 11. Suspension arm construction 12 extends in the direction of arrow C. Suspension arm construction 13 extends in the direction of arrow D. A wheel hub 14, 15 to which a front wheel 3 can be coupled is arranged on both ends 12a, 13a of suspension arm constructions 12, 13 remote from differential housing 11. Wheel hubs 14 and 15 are connected to suspension arm constructions 12 and 13 for rotation around rotation axes 14a and 15a. Wheel hubs 14 and 15 can be rotated around rotation axes 14a and 15a by means of steering rods 16 and 17. Wheel hubs 14 and 15 are connected via drive shafts 18 and 19 to a differential which is arranged in differential housing 11 and which can be connected via input shaft 28 to the drive of agricultural tractor 1. Suspension arm construction 12 is shown with a lower suspension arm 20 and an upper suspension arm 21 extending substantially parallel to each other. The lower suspension arm 20 and an upper suspension arm 21 are connected to differential housing 11 for pivoting around pivot axes 20a and 21a. Suspension arm construction 13 is shown with a lower suspension arm 22 and an upper suspension arm 23 which extend substantially parallel to each other. The lower suspension arm 22 and an upper suspension arm 23 are connected to differential housing 11 for pivoting around pivot axes 22a and 23a. Suspension arm constructions 12 and 13 enable a movement of wheel hubs 14 and 15 in the direction of arrows A transversely of the directions C and D in which suspension arm constructions 12 and 13 extend.

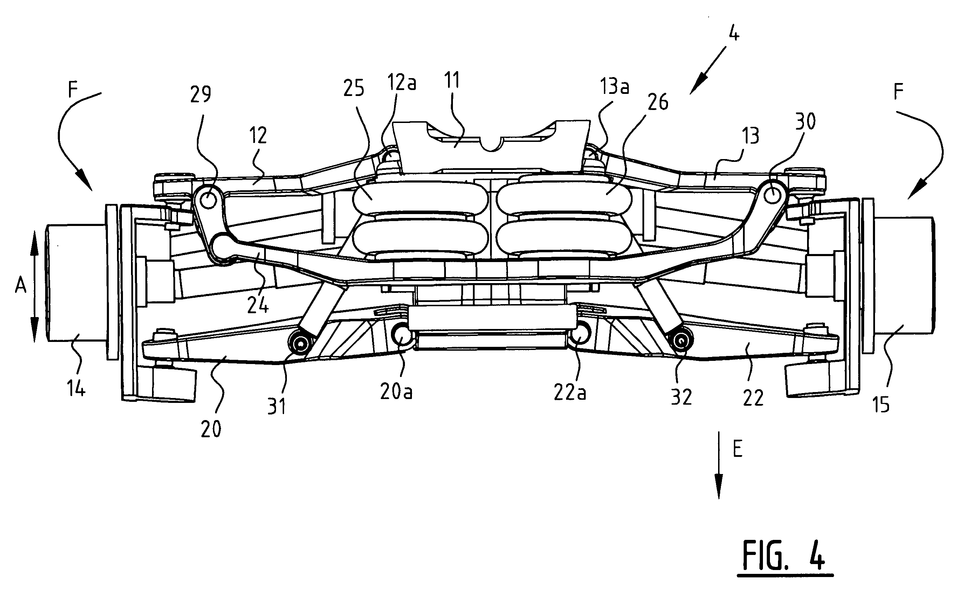

A coupling element movable relative to differential housing 11 extends between the ends 12a and 13a of suspension arm constructions 12 and 13 remote from differential housing 11 in the direction of arrows C and D, and connects the upper suspension arms 21 and 23 to each other such that the pivoting movements of upper suspension arms 21 and 23 around pivot axes 21a and 23a relative to differential housing 11 are linked. This linking of the pivoting movements of upper suspension arms 21 and 23 is further elucidated in the description of figures 4-6 following hereinbelow.

Two members changeable in length formed as air bellows (pneumatic bellows) 25 and 26 are arranged centrally on either side of the centre M between the ends 12a and 13a of suspension arm constructions 12 and 13 remote from differential housing 11. Pneumatic bellows 25 and 26 are connected with a first end 25a, 26a thereof to differential housing 11, connected with a second end 25b, 26b thereof to coupling element 24, and are changeable in length in the direction of arrows A substantially transversely of the direction in which the coupling element extends. Air bellows 25 and 26 are connected to the two upper suspension arms 21 and 23 via coupling element 24 such that with a change in the length of air bellows 25 and 26 a pivoting movement of the two upper suspension arms 21 and 23 can be realized relative to differential housing 11. This functional link between the change in the length of air bellows 25 and 26 is further elucidated in the following description of figures 4-6.

Coupling element 24 and air bellows 25 and 26 extend in a recess 27 of differential housing 11.

The operation of front axle assembly 4 of figures 2 and 3 is shown in figures 4-6. These figures show inter alia that coupling element 24 extends at a level between lower suspension arms 20, 22 and upper suspension arms 12, 13.

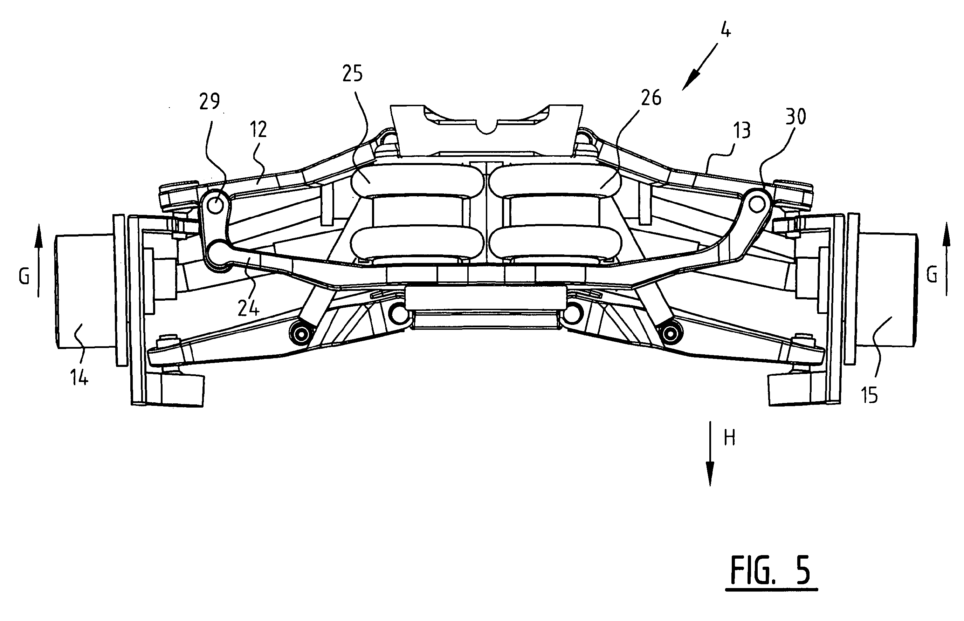

By introducing air into air bellows 25 and 26 from the situation as shown in figure 4, air bellows 25 and 26 lengthen in the direction of arrow A. Because coupling element 24 is movable relative to differential housing 11, the air bellows connected at a first end 25a, 26a to differential housing 11 and connected at second and 25b, 26b to coupling element 24 move this coupling element 24 in the direction of arrow E relative to differential housing 11. Connecting points 29 and 30 on upper suspension arms 12 and 13, at the position of which the upper suspension arms 12 and 13 are connected pivotally to coupling element 24, are here also moved in the direction of arrow E. As a result the upper suspension arms 12 and 13 pivot around pivot axes 12a and 13a in the direction of arrows F. Owing to the parallelogram construction formed by upper suspension arm 12, 13, lower suspension arm 20, 22, differential housing 11 and wheel hub 14, 15, the lower suspension arms 20 and 22 pivot here around pivot axes 20a and 22a in the direction of arrow F, and wheel hubs 14 and 15 move in the direction of arrow E relative to differential housing 11. The situation is thus realized as shown in figure 5. When front axle assembly 4 is arranged via differential housing 11 on chassis 5 of an agricultural tractor 1 as shown in figure 1, wherein front wheels 3 which support on a ground surface are arranged on wheel hubs 14 and 15, a displacement of wheel hubs 14 and 15 relative to differential housing 11 in the direction of arrow E results in a displacement of chassis 5 relative to the ground surface in the opposite direction, so that chassis 5 is moved higher relative to the ground surface. A height adjustment can hereby be realized with front axle assembly 4 by filling air bellows 25 and 26 with air.

By allowing air to escape from air bellows 25 and 26 from the situation as shown in figure 5, wheel hubs 14 and 15 can be moved in the direction of arrow G relative to differential housing 11 so that the situation as shown in figure 4 can once again be realized. When wheel hubs 14 and 15 are moved in the direction of arrows G relative to differential housing 11 without air being released from the air bellows, use is made of the spring action of air bellows 25 and 26 is addressed. A height adjustment and a suspension are hereby realized with air bellows 25 and 26. The damping of the movement of wheel hubs 14 and 15 relative to differential housing 11 is provided in this exemplary embodiment by the two damping elements 31 and 32.

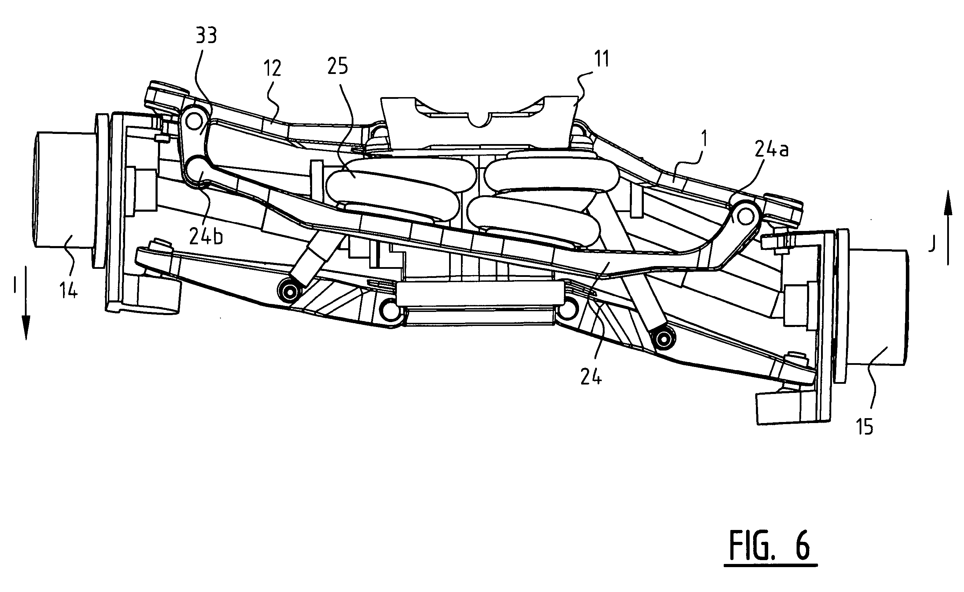

Owing to linking of the pivoting movements of the two upper suspension arms 12 and 13 by means of coupling element 24, which is only connected to differential housing 11 via upper suspension arms 12 and 13 and via air bellows 25 and 26, the front axle assembly is also oscillating, i.e. a movement of wheel hub 14 relative to differential housing 11 in the direction of arrow G results in a movement of wheel hub 15 in the direction of arrow H. The situation is then reached as shown in figure 6. As shown in figure 6, coupling element 24 tilts here so that the change in the length of air bellows 25 and 26 differs from the situation as shown in figure 5. Because coupling element 24 is directly connected close to a first end 24a thereof pivotally to upper suspension arm 13 and connected close to the second end 24b thereof to upper suspension arm 12 via an additional coupling element 33, which is pivotally connected to both the upper suspension arm 12 and the second end 24b of coupling element 24, the difference in length of coupling element 24 between the extreme positions of the suspension arms, moved upward and moved downward respectively, is compensated.

By pumping air into air bellows 25 from the situation as shown in figure 6 it is for instance possible to move wheel hub 14 in the direction of arrow I and wheel hub 15 in the direction of arrow J relative to differential housing 11, so that wheel hubs 14 and 15 are brought to the same level as shown in figure 5. The oscillating behaviour of front axle assembly 4 can thus be influenced.

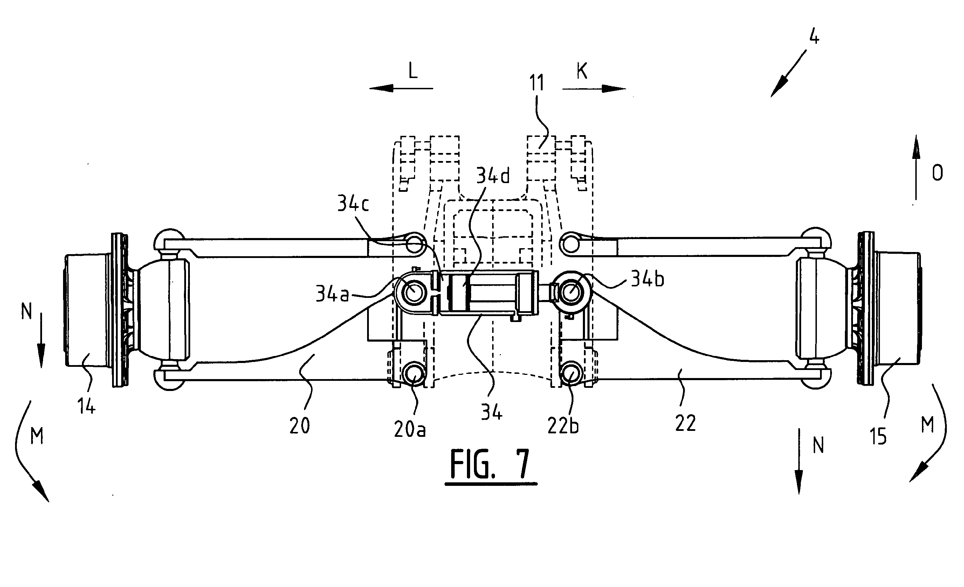

Figure 7 shows an alternative embodiment of the front axle assembly of figures 1-6. In the shown embodiment lower suspension arms 20 and 22 are connected to each other by means of a floating coupling element, i.e. not directly connected to differential housing 11, in the form of a hydraulic or pneumatic cylinder 34 such that the pivoting movements of lower suspension arms 20 and 22 relative to differential 11 are linked.

A first end 34a of cylinder 34 is pivotally connected to lower suspension arm 20 at a distance from pivot axis 20a, around which the lower suspension arm 20 is pivotable relative to differential housing 11. A second end 34b of cylinder 34 is pivotally connected to lower suspension arm 22 at a distance from pivot axis 22a, around which the lower suspension arm 22 is pivotable relative to differential housing 11.

By pumping air or oil into space 34c of cylinder 34 from the situation as shown in figure 7, piston 34d is displaced and cylinder 34 is extended so that ends 34a and 34b of cylinder 34 are pressed apart in the direction of arrows K and L. Because lower suspension arms 20, 22 are pivotable about pivot axes 20a and 20b, this extension of cylinder 34 results in a pivoting movement of lower suspension arms 20, 22 in the direction of arrow M relative to the differential housing. This results in wheel hubs 14 and 15 moving in the direction of arrows N. Cylinder 34 hereby comprises the member changeable in length, which is changeable in length in the direction in which the coupling element embodied as cylinder 34 extends.

Because cylinder 34 is arranged in floating manner, this embodiment of front axle assembly 4, just as the embodiment as shown in figures 1-6, is oscillating. From the situation shown in figure 7 a displacement of wheel hub 14 relative to differential housing 11 in the direction of arrow N results in a displacement of wheel hub 15 in the direction of arrow O. Figure 7 shows differential housing 11 in cross-section. Cylinder 34 extends in a recess in differential housing 11.

Cylinder 34 as shown in figure 7 functions as spring member, damping member and length-adjustable member so that individual damping elements as shown in figures 1-6 are unnecessary.

In figures 1-6 the member changeable in length takes the form of an air bellows. In figure 7 the member changeable in length takes the form of a hydraulic or pneumatic cylinder. The member changeable in length can otherwise also take the form of a spring member, damping member and/or length-adjustable member.

In figures 1-6 two members changeable in length are arranged on either side of centre M. It is for instance also possible to arrange a single member changeable in length in the centre M. It is also possible to arrange three members changeable in length. For instance one in the centre M and two on either side thereof. It is also possible to arrange two, or more than two, members changeable in length on either side of centre M.

Figure 1 shows a vehicle in the form of an agricultural tractor, which is provided with a front axle according to the invention. Other vehicles can also be provided with a front axle assembly according to the invention, such as a fork-lift truck. In the case of a fork-lift truck the front axle assembly will be formed at the rear.

Figures 1-6 and figure 7 show a front axle assembly according to the invention, wherein the coupling element is movable relative to the suspension construction such that the front axle assembly is oscillating, wherein particularly the coupling element is movable relative to the suspension construction in a plane extending substantially perpendicularly of the pivot axes of the suspension arms coupled by means of the coupling element. For the front axle assembly according to the invention as shown in figures 1-6, and in the front axle assembly according to the invention as shown in figure 7, the movement which the coupling element can make relative to the suspension construction comprises a translation and a rotation in the plane extending substantially perpendicularly of the pivot axes of the suspension arms coupled by means of the coupling element.

## Claims

1. Oscillating front axle assembly (4) for a vehicle (1), such as an agricultural tractor, comprising
- a suspension construction (11);
- two suspension arm constructions (12, 13) which extend in opposite directions (C, D) from the suspension construction (11) and are both adapted at an end (12a, 13a) remote from the suspension construction (11) to bear a wheel (3) of the vehicle (1), and which both comprise a suspension arm (21, 23) connected pivotally to the suspension construction (11);
- a coupling element (24) which is movable relative to the suspension construction (11) and extends between the ends (12a, 13a) of the suspension arm constructions (12, 13) remote from the suspension construction (11), and which connects the suspension arms (21, 23) to each other such that the pivoting movements of the suspension arms relative to the suspension construction (11) are linked such that the front axle assembly (4) is given an oscillating form; and
- at least one member (25, 26) changeable in length which is arranged substantially centrally between the ends (12a, 13a) of the suspension arm constructions (12, 13) remote from the suspension construction (11) and connected to both suspension arms (21, 23) such that, with a change in the length of the at least one member changeable in length, a pivoting movement of both suspension arms (21, 23) relative to the suspension construction (11) can be realized;
wherein
- the at least one member (25, 26) changeable in length is connected with a first end thereof (25a, 26a) to the suspension construction (11), is connected with a second end (25b, 26b) thereof to the coupling element (24), and is changeable in length substantially transversely of the direction in which the coupling element extends;
**characterized in that**
- the coupling element (24) is directly connected close to a first end (24a) thereof to the one suspension arm (23) and connected close to the second end (24b) thereof to the other suspension arm (21) via an additional coupling element (33) which is connected pivotally to the other suspension arm (21) and to the second end (24b) of the coupling element (24).

2. Front axle assembly (4) as claimed in claim 1,
wherein
- two members (25, 26) changeable in length are arranged on either side of the centre (M) between the ends (12a, 13a) of the suspension arm constructions (12, 13) remote from the suspension construction (11).

3. Front axle assembly as claimed in claim 1 or 2,
wherein
- the at least one member (25, 26) changeable in length comprises at least one member from the group of spring member, damping member and length-adjustable member.

4. Front axle assembly as claimed in claim 3, wherein
- the at least one member (25, 26) changeable in length is a member from the group of pneumatic member, preferably a pneumatic bellows, and hydraulic member.

5. Front axle assembly as claimed in any of the claims 1 to 4, wherein both suspension arm constructions (12, 13) comprise at least a lower suspension arm (20, 22) and an upper suspension arm (21, 23) extending substantially parallel to each other, wherein the coupling element (24) connects one of the lower suspension arms (20, 22) and the upper suspension arms (21, 23) to each other and extends at a level between the lower suspension arms (20, 22) and the upper suspension arms (21, 23).

6. Front axle assembly (4) as claimed in any of the claims 1 to 5, wherein at least one of the coupling element (24) and the at least one member (25, 26) changeable in length extends in a recess (27) of the suspension construction (11).

7. Front axle assembly as claimed in any of the claims 1 to 6, wherein the suspension construction (11) is a differential housing.

8. Front axle assembly as claimed in any of the claims 1 to 7, wherein
- a wheel hub (14, 15) to which the wheel (3) to be carried can be coupled is arranged on both ends (12a, 13a) of the suspension arm constructions (12, 13) remote from the suspension construction (11), which wheel hub (14, 15) is connected rotatably to the associated suspension arm construction (12, 13).

9. Vehicle (1), preferably an agricultural tractor, provided with a front axle assembly (4) as claimed in any of the claims 1-8.

## Patentansprüche

1. Schwingendes Vorderachsaggregat (4) für ein Fahrzeug (1), wie zum Beispiel einen landwirtschaftlichen Traktor, umfassend
- eine Aufhängungskonstruktion (11);
- zwei Aufhängungsarmkonstruktionen (12, 13), welche sich in entgegengesetzten Richtungen (C, D) von der Aufhängungskonstruktion (11) erstrecken und beide an einem der Aufhängungskonstruktion (11) fernem Ende (12a, 13a) angepasst sind, um ein Rad (3) des Fahrzeugs (1) zu tragen, und welche beide einen Aufhängungsarm (21, 23) umfassen, welcher schwenkbar mit der Aufhängungskonstruktion (11) verbunden ist;
- ein Kupplungselement (24), das relativ zur Aufhängungskonstruktion (11) beweglich ist und sich zwischen den der Aufhängungskonstruktion (11) fernen Enden (12a, 13a) der Aufhängungsarmkonstruktionen (12, 13) erstreckt, und welches die Aufhängungsarme (21, 23) so miteinander verbindet, dass die schwenkenden Bewegungen der Aufhängungsarme relativ zu der Aufhängungskonstruktion (11) so verbunden werden, dass dem Vorderachsaggregat (4) eine schwingende Form gegeben wird; und
- mindestens ein in der Länge veränderbares Glied (25, 26), welches im Wesentlichen zentral zwischen den der Aufhängungskonstruktion (11) fernen Enden (12a, 13a) der Aufhängungsarmkonstruktionen (12, 13) angebracht und so mit beiden Aufhängungsarmen (21, 23) verbunden ist, dass, mit einem Wechsel in der Länge des mindestens einen in der Länge veränderbaren Gliedes, eine schwenkende Bewegung von beiden Aufhängungsarmen (21, 23) relativ zu der Aufhängungskonstruktion (11) verwirklicht werden kann; wobei
- das mindestens eine in der Länge veränderbare Glied (25, 26) mit einem ersten Ende davon (25a, 26a) mit der Aufhängungskonstruktion (11) verbunden ist, mit einem zweiten Ende (25b, 26b) davon mit dem Kupplungselement (24) verbunden ist, und im Wesentlichen quer zu der Richtung, in welcher sich das Kupplungselement erstreckt, in der Länge veränderbar ist;
**dadurch gekennzeichnet, dass**
- das Kupplungselement (24) nahe einem ersten Ende (24a) davon direkt mit dem einen Aufhängungsarm (23) verbunden ist und nahe dem zweiten Ende (24b) davon über ein zusätzliches Kupplungselement (33), welches schwenkbar mit dem anderen Aufhängungsarm (21) und dem zweiten Ende (24b) des Kupplungselements (24) verbunden ist, mit dem anderen Aufhängungsarm (21) verbunden ist.

2. Vorderachsaggregat (4) wie in Anspruch 1 beansprucht, wobei
- zwei in der Länge veränderbare Glieder (25, 26) auf jeder Seite der Mitte (M) zwischen den der Aufhängungskonstruktion (11) fernen Enden (12a, 13a) der Aufhängungsarmkonstruktionen (12, 13) angebracht sind.

3. Vorderachsaggregat wie in Anspruch 1 oder 2 beansprucht, wobei
- das mindestens eine in der Länge veränderbare Glied (25, 26) zumindest ein Mitglied der Gruppe aus Federglied, Dämpfungsglied und längenverstellbarem Glied umfasst.

4. Vorderachsaggregat wie in Anspruch 3 beansprucht, wobei
- das mindestens eine in der Länge veränderbare Glied (25, 26) ein Mitglied der Gruppe aus pneumatischem Glied, vorzugsweise ein pneumatischer Balg, und hydraulischem Glied ist.

5. Vorderachsaggregat wie in einem der Ansprüche 1 bis 4 beansprucht, wobei beide Aufhängungsarmkonstruktionen (12, 13) zumindest einen unteren Aufhängungsarm (20, 22) und einen oberen Aufhängungsarm (21, 23) umfassen, die sich im Wesentlichen parallel zueinander erstrecken, wobei das Kupplungselement (24) einen der unteren Aufhängungsarme (20, 22) und der oberen Aufhängungsarme (21, 23) miteinander verbindet und sich auf einer Höhe zwischen den unteren Aufhängungsarmen (20, 22) und den oberen Aufhängungsarmen (21, 23) erstreckt.

6. Vorderachsaggregat (4) wie in einem der Ansprüche 1 bis 5 beansprucht, wobei zumindest eines von dem Kupplungselement (24) und dem mindestens einen in der Länge verstellbaren Glied (25, 26) sich in eine Ausnehmung (27) der Aufhängungskonstruktion (11) erstreckt.

7. Vorderachsaggregat wie in einem der Ansprüche 1 bis 6 beansprucht, wobei die Aufhängungskonstruktion (11) ein Differentialgehäuse ist.

8. Vorderachsaggregat wie in einem der Ansprüche 1 bis 7 beansprucht, wobei
- eine Radnabe (14, 15), an welche das zu tragende Rad (3) gekoppelt werden kann, an beiden der Aufhängungskonstruktion (11) fernen Enden (12a, 13a) der Aufhängungsarmkonstruktionen (12, 13) angebracht ist, wobei die Radnabe (14, 15) drehbar mit der dazugehörigen Aufhängungsarmkonstruktion (12, 13) verbunden ist.

9. Fahrzeug (1), bevorzugterweise ein landwirtschaftlicher Traktor, der mit einem wie in einem der Ansprüche 1 bis 8 beanspruchten Vorderachsaggregat (4) ausgestattet ist.

## Revendications

1. Ensemble d'essieu avant oscillant (4) pour un véhicule (1) tel qu'un tracteur agricole, comprenant :
- une structure de suspension (11) ;
- deux structures de bras de suspension (12, 13) qui s'étendent dans des directions opposées (C, D) à partir de la structure de suspension (11) et sont toutes deux adaptées au niveau d'une extrémité (12a, 13a) à distance de la structure de suspension (11) pour supporter une roue (3) du véhicule (1), et qui comprennent toutes deux un bras de suspension (21, 23) raccordé de manière pivotante à la structure de suspension (11) ;
- un élément de couplage (24) qui est mobile par rapport à la structure de suspension (11) et s'étend entre les extrémités (12a, 13a) des structures de bras de suspension (12, 13) à distance de la structure de suspension (11) et qui raccorde les bras de suspension (21, 23) entre eux de sorte que les mouvements pivotants des bras de suspension par rapport à la structure de suspension (11) sont reliés de sorte que l'ensemble d'essieu avant (4) se présente sous une forme oscillante ; et
- au moins un élément (25, 26) à longueur variable qui est agencé de manière sensiblement centrale entre les extrémités (12a, 13a) des structures de bras de suspension (12, 13) à distance de la structure de suspension (11) et raccordé aux deux bras de suspension (21, 23) de sorte que, avec un changement de longueur du au moins un élément à longueur variable, un mouvement pivotant des deux bras de suspension (21, 23) par rapport à la structure de suspension (11) peut être réalisé ;
dans lequel
- le au moins un bras (25, 26) à longueur variable est raccordé avec sa première extrémité (25a, 26a) à la structure de suspension (11), est raccordé avec sa deuxième extrémité (25b, 26b) à l'élément de couplage (24), et a une longueur variable de manière sensiblement transversale par rapport à la direction dans laquelle l'élément de couplage s'étend ;
**caractérisé en ce que**
- l'élément de couplage (24) est directement raccordé à proximité de sa première extrémité (24a) au premier bras de suspension (23) et raccordé à proximité de sa deuxième extrémité (24b) à l'autre bras de suspension (21) via un élément de couplage supplémentaire (33) qui est raccordé de manière pivotante à l'autre bras de suspension (21) et à la deuxième extrémité (24b) de l'élément de couplage (24).

2. Ensemble d'essieu avant (4) selon la revendication 1, dans lequel :
- deux éléments (25, 26) à longueur variable sont agencés de chaque côté du centre (M) entre les extrémités (12a, 13a) des structures de bras de suspension (12, 13) à distance de la structure de suspension (11).

3. Ensemble d'essieu avant selon la revendication 1 ou 2, dans lequel :
- le au moins un élément (25, 26) à longueur variable comprend au moins un élément du groupe comprenant un élément de ressort, un élément d'amortissement et un élément réglable en longueur.

4. Ensemble d'essieu avant selon la revendication 3, dans lequel :
- le au moins un élément (25, 26) à longueur variable est un élément du groupe comprenant un élément pneumatique, de préférence un soufflet pneumatique et un élément hydraulique.

5. Ensemble d'essieu avant selon l'une quelconque des revendications 1 à 4, dans lequel les deux structures de bras de suspension (12, 13) comprennent au moins un bras de suspension inférieur (20, 22) et un bras de suspension supérieur (21, 23) s'étendant de manière sensiblement parallèle entre eux, dans lequel l'élément de couplage (24) raccorde l'un des bras de suspension inférieurs (20, 22) et les bras de suspension supérieurs (21, 23) entre eux et s'étend à un niveau entre les bras de suspension inférieurs (20, 22) et les bras de suspension supérieurs (21, 23).

6. Ensemble d'essieu avant (4) selon l'une quelconque des revendications 1 à 5, dans lequel au moins l'un parmi l'élément de couplage (24) et le au moins un élément (25, 26) à longueur variable s'étend dans un évidement (27) de la structure de suspension (11).

7. Ensemble d'essieu avant selon l'une quelconque des revendications 1 à 6, dans lequel la structure de suspension (11) est un boîtier différentiel.

8. Ensemble d'essieu avant selon l'une quelconque des revendications 1 à 7, dans lequel :
- un moyeu de roue (14, 15) auquel la roue (3) à supporter peut être couplée, est agencé sur deux extrémités (12a, 13a) des structures de bras de suspension (12, 13) à distance de la structure de suspension (11), lequel moyeu de roue (14, 15) est raccordé de manière rotative à la structure de bras de suspension (12, 13) associée.

9. Véhicule (1), de préférence un tracteur agricole, prévu avec un ensemble d'essieu avant (4) selon l'une quelconque des revendications 1 à 8.
